# EUROPÄISCHE PATENTANMELDUNG

(11) **EP 2 692 477 A1**
(43) Veröffentlichungstag der Anmeldung: **05.02.2014**
(21) Anmeldenummer: 12179135.4
(22) Anmeldetag: 03.08.2012
(51) Int. Cl.: B23K 26/38, B23K 26/14, B23D 65/02

(54) **Verfahren und Vorrichtung zur Herstellung einer Sägezahnstruktur**

(71) Anmelder: Air Liquide Deutschland GmbH, 40235 Düsseldorf (DE); L'AIR LIQUIDE, Société Anonyme pour l'Etude et l'Exploitation des Procédés Georges Claude, 75007 Paris (FR)
(72) Erfinder: Kaya, Cerkez, 47804 Krefeld (DE)
(74) Vertreter: Kahlhöfer, Hermann

(57) **Zusammenfassung**

Die vorliegende Erfindung betrifft ein Verfahren und eine Vorrichtung zur Herstellung einer Sägezahnstruktur (2), bei dem die Sägezahnstruktur (2) mit einem von einem Laser (3) emittierten Laserstrahl in ein Werkstück (6) geschnitten wird. Der Laserstrahl wirkt in einem Schnittpunkt (8) auf das Werkstück (6) ein. Das Werkstück (6) wird zumindest in einem Bereich um den Schnittpunkt (8) durch Bereitstellen eines Kühlmittels gekühlt. Nach dem Schneiden wird zumindest die Sägezahnstruktur (2) des Werkstücks (6) durch ein chemisches Verfahren bearbeitet, wodurch eine Oberflächenschicht zumindest der Sägezahnstruktur (2) des Werkstücks (6) abgetragen wird.

Die vorliegende Erfindung erlaubt es, die beim Laserstrahlschneiden entstehende Änderung des Gefüges eines Werkstücks auf eine Tiefe zu reduzieren, die mit einer chemischen Nachbehandlung entfernt werden kann. Der Herstellungsprozess von Sägezahnstrukturen kann somit erheblich verkürzt werden.

## Beschreibung

Die vorliegende Erfindung betrifft ein Verfahren und eine Vorrichtung zur Herstellung einer Sägezahnstruktur in einem Werkstück. Die Sägezahnstruktur wird von einem von einem Laser emittierten Laserstrahl in das Werkstück geschnitten, so dass ein Sägeblatt hergestellt wird.

Es ist bekannt Sägezahnstrukturen in Werkstücke zu fräsen. Dabei werden mehrere Bänder übereinander gespannt und die Sägezähne spanend ausgearbeitet. Dies ist allerdings sehr aufwendig und mit hohem Materialverschleiß von Werkzeug und speziellem Kühlmittel verbunden. Auch ist bereits bekannt, Sägezahnstrukturen in ein Werkstück mit einem von einem Laser emittierten Laserstrahl zu schneiden. Es hat sich allerdings herausgestellt, dass beim Schneiden mit einem Laser das Gefüge des normalerweise metallischen Werkstücks bis zu einer Tiefe von 120 µm verändert wird. In dieser Grenzschicht ist die Härte des Stahls verändert, so dass sie zum Sägen ungeeignet ist. Es wurde bereits versucht, diese Oberflächenschichten mit Hilfe von chemischen Verfahren nachträglich zu entfernen. Allerdings lässt sich pro Verfahrensdurchgang nur eine Schicht von bis zu 40 µm entfernen, was zur Folge hat, dass das chemische Verfahren mehrmals angewandt werden muss. Eine wirtschaftliche Anwendung des Schneidens von Sägezahnstrukturen mittels Laserstrahl scheint daher nicht sinnvoll.

Es ist daher Aufgabe der vorliegenden Erfindung, die mit Bezug zum Stand der Technik geschilderten Probleme zumindest teilweise zu lösen. Insbesondere ist es Aufgabe der vorliegenden Erfindung, ein Verfahren und eine Vorrichtung zur Herstellung einer Sägezahnstruktur anzugeben, die ohne das wiederholte Anwenden eines chemischen Verfahrens zur Abtragung einer Oberflächenschicht auskommt.

Diese Aufgabe wird gelöst durch ein Verfahren und eine Vorrichtung gemäß den unabhängigen Ansprüchen. Vorteilhafte Weiterbildungen sind in den abhängigen Ansprüchen angegeben und in der Beschreibung näher dargelegt. Die in den Patentansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausführungsvarianten der Erfindung aufgezeigt werden.

Die Aufgabe wird insbesondere durch ein Verfahren zur Herstellung einer Sägezahnstruktur gelöst, bei dem die Sägezahnstruktur mit einem von einem Laser emittierten Laserstrahl in ein Werkstück geschnitten wird. Dabei wirkt der Laserstrahl in einem Schnittpunkt auf das Werkstück ein. Zumindest in einem Bereich um den Schnittpunkt wird das Werkstück durch Bereitstellen eines Kühlmittels gekühlt.

In der Regel wird das Verfahren mit einem Kohlendioxidlaser durchgeführt, der einen Laserstrahl mit einer Wellenlänge von 10,6 µm emittiert und mit einer Leistung von einigen Kilowatt betrieben wird. Alternativ kann das Verfahren aber auch mit anderen geeigneten Lasern verwendet werden, wie beispielsweise Feststofflasern, Gaslasern oder Faserlasern beziehungsweise Disklasern.

Je nach Verwendung der hergestellten Sägeblätter kommen als Werkstück metallische Bleche, insbesondere Bleche aus einem Werkzeugstahl, Hartmetall oder Bimetall zum Einsatz. Bimetallbleche und Bimetallbänder bestehen aus eine Trägerblech beziehungsweise Bimetallband aus legiertem Vergütungsstahl und einem gehärteten Schneidband aus HSS-Stahl mit einer Härte von bis zu 69 HRC, die mit einem Laser oder Elektronenstrahl miteinander verschweißt wurden. Als Werkstück werden auch zu Wickeln aufgerollte Bleche oder Blechbändern verwendet, die dem Schneidprozess fortlaufend zugeführt werden.

Der Punkt, an dem der Laserstrahl auf das Werkstück trifft, wird als Schnittpunkt bezeichnet. Durch Bewegen des Werkstücks und/oder durch Umlenken des Laserstrahls bei einem Freistrahllaser beziehungsweise durch Bewegen einer Glasfaser bei einem fasergekoppelten Laser wird die Sägezahnstruktur in das Werkstück geschnitten.

Erfindungsgemäß wird zumindest der Bereich um den Schnittpunkt durch Bereitstellen eines Kühlmittels gekühlt. Das bedeutet insbesondere, dass entweder der Schnittpunkt selbst oder ein nicht weit von dem Schnittpunkt entfernter Bereich des Werkstücks unmittelbar mit einem bereitgestellten Kühlmittel in Kontakt gebracht wird. Der Kontaktpunkt des Kühlmittels mit dem Werkstück sollte nicht mehr als 2 cm, bevorzugt nicht mehr als 0,5 cm von dem Schnittpunkt entfernt sein. Dazu kann das Werkstück nur lokal mit einem Kühlmittel in Kontakt gebracht werden, es kann aber auch über eine große Fläche mit dem Kühlmittel in Kontakt gebracht werden. Das Kühlmittel kann sowohl von der mit dem Laserstrahl bestrahlten Seite als auch von der entgegengesetzten Seite auf das Werkstück wirken. Unter Bereitstellen eines Kühlmittels soll verstanden werden, dass ein Mittel dem Schnittpunktbereich zugeführt wird oder dort zur Verfügung gestellt wird zum Zwecke des Kühlens. Insbesondere sollte das Kühlmittel im Schnittbereich den Abkühlvorgang beschleunigen im Vergleich zu einer Abkühlung unter Raumtemperaturbedingungen. Insbesondere umfasst das Kühlmittel ein kälteverflüssigtes Gas, welches beim oder kurz nach dem Auftreffen auf dem Werkstück verdampft, so dass die Verdampfungsenthalpie zur Kühlung zur Verfügung steht. Das Kühlmittel vermindert somit den Wärmeeintrag in das Werkstück und reduziert somit den Härteverlust im Schnittbereich.

Durch das Bereitstellen eines Kühlmittels im Bereich des Schnittpunkts wird erreicht, dass die Gefügeänderung in der Oberfläche des Werkstücks nur bis zu einer Tiefe von einigen 10 µm auftritt. Somit ist es möglich, mit nur einem anschließenden chemischen Behandlungsvorgang diese geänderte Gefügeschicht zu entfernen. Somit ist das Herstellen von Sägezahnstrukturen durch Laserschneiden mit geringerem Nachbearbeitungsaufwand möglich. Daher ist es bevorzugt, dass nach dem Schneiden zumindest die Sägezahnstruktur des Werkstücks durch ein chemisches Verfahren bearbeitet wird, wodurch eine Oberflächenschicht der Sägezahnstruktur des Werkstücks abgetragen wird. Insbesondere wird das durch Laserschneiden bearbeitete Werkstück durch ein chemisches Bad geführt. Bevorzugt wird die Oberflächenschicht mittels chemischen Ätzens und/oder galvanischer Behandlung entfernt. Die Oberflächenschicht kann auch durch elektrisches Polieren abgetragen werden.

Ferner ist bevorzugt, dass eines der folgenden Kühlmittel eingesetzt wird:
- Kohlendioxid (CO₂),
- Stickstoff (N₂)
- Argon (Ar),
- Argon-Sauserstoffgemisch,
- Stickstoff-Sauerstoffgemisch,
- Wasser,
- Öl-Emulsion.

Kohlendioxid wird in der Regel unter Druck in flüssiger Phase gespeichert und kann als Kühlmittel in gasförmiger Form oder als Kohlendioxidschnee in fester Form eingesetzt werden. Stickstoff wird in flüssiger Phase gelagert und kann als Kühlmittel in flüssiger Phase oder in gasförmiger Phase in den Bereich um den Schnittpunkt bereitgestellt werden. Wasser kann in Tröpfchenform als Nebel oder als Wasserbad zum Kühlen im Bereich des Schnittpunkts zur Verfügung gestellt werden. Vorteilhaft ist auch, wenn dem Kühlmittel ein Gas zugefügt wird, dass den Schneidprozess unterstützt. So können beispielsweise Helium und/oder Argon dem Kühlmittel zugegeben werden oder als Kühlmittel eingesetzt werden. Zudem kann durch gezielten Einsatz von Argon-Sauerstoffgemischen beziehungsweise Stickstoff-Sauerstoffgemischen die Oxid- und Nitridbildung in den Oberflächenschichten begünstigt und somit der Härteverlust vermindert werden.

Auch ist bevorzugt, eine der folgenden Kühltechniken zum Bereitstellen des Kühlmittels anzuwenden:
- Badkühlung,
- Tropfenkühlung,
- Gaskühlung,
- Sprühnebelkühlung,
- Trockeneiskühlung.

Bei der Badkühlung befindet sich der gesamte Bereich um den Schnittpunkt des Werkstücks in einem Bad aus Kühlmittel. Hierbei wird bevorzugt Wasser oder flüssiger Stickstoff als Kühlmittel eingesetzt. Bei der Tropfenkühlung wird ein zuvor flüssig gespeichertes Kühlmittel durch Bereitstellen in einer Düse mit entsprechenden Parametern des Drucks und der Durchlaufmenge in Tropfenform auf den zu kühlenden Bereich aufgebracht. Hierbei wird insbesondere Wasser und flüssiger Stickstoff eingesetzt. Bei der Gaskühlung wird ein kaltes Gas in den Bereich des Schnittpunkts eingeleitet. Hierfür wird insbesondere gasförmiger Stickstoff und/oder gasförmiges Kohlendioxid eingesetzt. Bei der Sprühnebelkühlung wird ein flüssig gespeichertes Kühlmittel über eine geeignete Düse bei entsprechenden Drücken und Durchflüssen zerstäubt, so dass sich ein Sprühnebel ausbildet. Diese Kühltechnik wird bevorzugt mit Wasser oder flüssigem Stickstoff betrieben. Bei der Trockeneiskühlung wird festes Kohlendioxid in dem Bereich um den Schnittpunkt bereitgestellt. Das Trockeneis kann entweder als solches direkt in den Kühlbereich eingegeben werden oder durch Sublimation von flüssigem Kohlendioxid beim Eingeben in die Kühlzone um den Schnittpunkt hergestellt werden.

Besonders bevorzugt ist, wenn das Kühlmittel als Inertgas für das Schneiden mit dem Laserstrahl dient. Auf diese Weise wird das Kühlmittel nicht nur zum Kühlen sondern auch zur Inertisierung der Gasatmosphäre während des Schneidprozesses eingesetzt. Somit werden eventuell nachteilige Oxidationen des Werkstücks vermieden. Ein besseres Schneidergebnis wird erzielt. Hierzu werden bevorzugt Stickstoff, Argon und/oder Kohlendioxid als Kühlmittel verwendet.

Einem weiteren Aspekte der Erfindung folgend wird eine Vorrichtung zur Herstellung einer Sägezahnstruktur vorgeschlagen. Die Vorrichtung umfasst eine Lasereinrichtung zur Erzeugung und Führung eines Laserstrahls, eine Kühleinrichtung zum Bereitstellen eines Kühlmittels, eine Haltevorrichtung für ein Werkstück und eine Steuereinrichtung. Die Steuereinrichtung ist eingerichtet, die Lasereinrichtung und/oder die Haltevorrichtung so zu bewegen, dass die Sägezahnstruktur in dem Werkstück durch einen von der Lasereinrichtung emittierten Laserstrahl hergestellt wird. Die Kühleinrichtung ist so ausgerichtet, dass zumindest in einem Bereich um einen Schnittpunkt, in dem der Laserstrahl auf das Werkstück einwirkt, das Werkstück gekühlt wird.

Die Vorrichtung ist insbesondere zur Durchführung des erfindungsgemäßen Verfahrens eingerichtet.

Die Lasereinrichtung umfasst insbesondere einen Laser zur Erzeugung des Laserstrahls und Mittel zum Umlenken beziehungsweise Führen des Laserstrahls. Dies sind insbesondere Spiegel oder lichtleitende Fasern in Abhängigkeit des verwendeten Lasers. Zu der Lasereinrichtung gehören aber auch solche Halteelemente, die die optischen Elemente halten. Die Kühleinrichtung umfasst solche Elemente, die ein in einem Tank vorgehaltenen Kühlmittel zum Kühlbereich führen beziehungsweise dort vorhalten. Die Steuereinrichtung ist insbesondere mit der Lasereinrichtung, der Kühleinrichtung und der Haltevorrichtung steuerungstechnisch verbunden und eingerichtet und ausgestattet, um diese zu steuern. Die Steuereinrichtung steuert die Herstellung der Sägezahnstruktur in dem Werkstück. Dabei kann entweder die Haltevorrichtung mit dem Werkstück relativ zu dem Laserstrahl bewegt werden, der Laserstrahl relativ zu dem ortsfesten Werkstück auf der Haltevorrichtung bewegt werden oder die Haltevorrichtung und der Laserstrahl beide bewegt werden. Die Kühleinrichtung ist so ausgerichtet, dass das Kühlmittel in einem Bereich um den Schnittpunkt auf das Werkstück gelangt. Dies kann entweder fortlaufend während des Schneidprozesses geschehen oder durch Bereitstellen eines Kühlmittelbads, wobei das Werkstück während des Schneidprozesses in dem Kühlmittelbad zumindest mit dem Bereich des Schnittpunkts angeordnet ist. Durch das Kühlen des Werkstücks während des Schneidprozesses wird in dem Werkstück nur eine dünne Oberflächenschicht von einigen Mikrometern Tiefe in dem Werkstück durch den Laser in seinem Gefüge verändert. Somit kann durch einmalige anschließende chemische Behandlung diese Oberflächenschicht von dem Werkstück entfernt werden. Hierzu weist die Vorrichtung bevorzugt eine entsprechende chemische Behandlungseinrichtung auf.

Gemäß einer vorteilhaften Weiterbildung der Vorrichtung ist die Kühleinrichtung zumindest teilweise in die Lasereinrichtung integriert. Damit ist gemeint, dass zumindest ein Element der Kühleinrichtung auch ein Element der Lasereinrichtung bildet. So ist besonders bevorzugt, dass ein Halteelement für eine Linse der Lasereinrichtung auch als Düse für das Kühlmittel dient. Dieses Element ist insbesondere so ausgebildet, dass der Laserstrahl und das Kühlmittel im Wesentlichen parallel auf die Oberfläche des Werkstücks treffen. Der Laserstrahl ist somit von einer Hülle aus Kühlmittel beim Auftreffen auf das Werkstück umgeben. Dadurch ist eine gleichmäßige Kühlung um den Schnittpunkt herum möglich.

Alternativ ist die Kühleinrichtung separat von der Lasereinrichtung ausgebildet. Das bedeutet insbesondere, dass der Laserstrahl von einer ersten Richtung auf das Werkstück trifft und das Kühlmittel aus einer zweiten Richtung mit einem Winkel zu der ersten Richtung auf das Werkstück trifft. Dabei treffen der Laserstrahl und das Kühlmittel bevorzugt in dem Schnittpunkt auf das Werkstück.

Die für das erfindungsgemäße Verfahren offenbarten Details und Vorteile lassen sich auf die erfindungsgemäße Vorrichtung übertragen und anwenden und umgekehrt.

Die Erfindung sowie das technische Umfeld werden nachfolgend anhand der Figuren beispielhaft erläutert. Es ist darauf hinzuweisen, dass die Figuren besonders bevorzugte Ausführungsvarianten der Erfindung zeigen, diese jedoch nicht darauf beschränkt ist. Es zeigen schematisch:
Fig. 1: eine erste Ausführungsform der Vorrichtung, und
Fig. 2: eine zweite Ausführungsform der Vorrichtung.

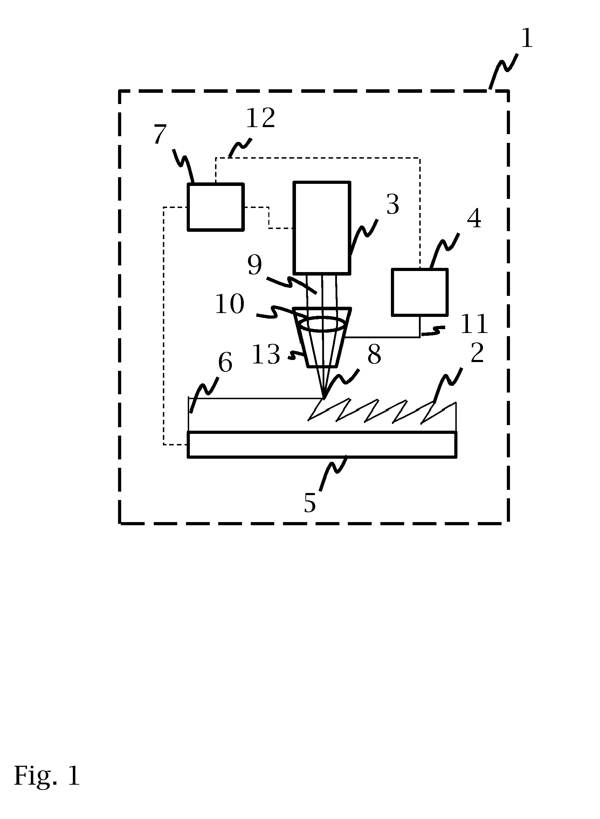

Fig. 1 zeigt schematisch eine erfindungsgemäße Vorrichtung 1 zur Herstellung einer Sägezahnstruktur 2 in einem Werkstück 6. Die Vorrichtung 1 umfasst eine Haltevorrichtung 5 für das Werkstück 6. Ferner weist die Vorrichtung 1 eine Kühlmittelpumpe 4 und einen Laser 3 auf. Der Laser 3, die Kühlmittelpumpe 4 und die Haltevorrichtung 5 sind über Datenleitungen 12 mit einer Steuereinrichtung 7 verbunden. Der Laser 3 emittiert im Betrieb einen Laserstrahl 9, der durch ein optisches Element 10 auf das Werkstück 6 fokussiert wird. Der Punkt, an dem der Laserstrahl 9 auf das Werkstück 6 auftrifft, wird als Schnittpunkt 8 bezeichnet. Das optische Element 10 wird in einer Düse 13 gehalten, durch die ein Kühlmittel auf das Werkstück 6 aufgebracht wird. Dazu ist die Düse 13 über eine Leitung 11 mit der Kühlmittelpumpe 4 verbunden.

Im Betrieb werden die Haltevorrichtung 5 und der Laserstrahl 9 so relativ zueinander bewegt, dass die Sägezahnstruktur 2 aus dem Werkstück 6 herausgeschnitten wird. Dabei treffen der Laserstrahl 9 und das Kühlmittel nahezu parallel auf die Oberfläche des Werkstücks. Somit wird eine gleichmäßige Kühlung um den Schnittpunkt 8 im Werkstück 6 erzielt.

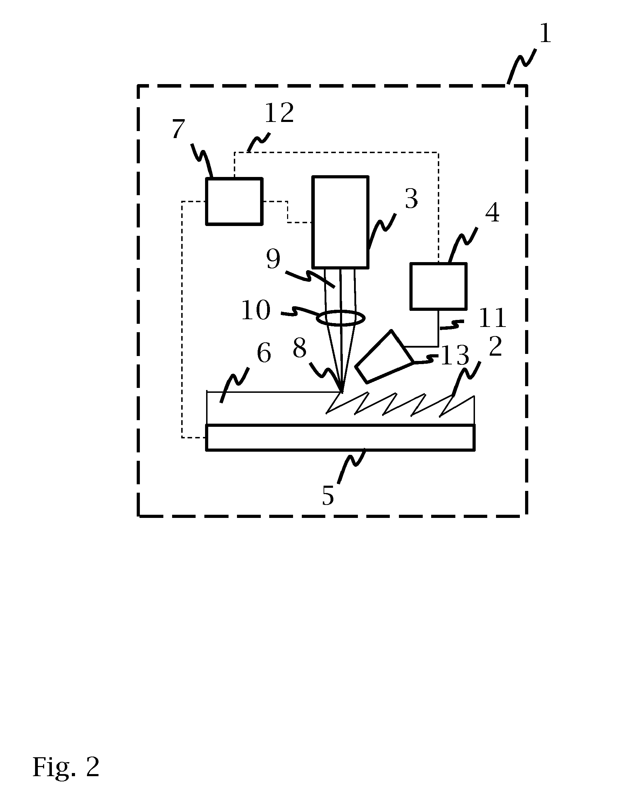

Fig. 2 zeigt eine zweite Ausführungsform der Vorrichtung 1. Diese Ausführungsform ist ähnlich der Ausführungsform der Fig. 1 aufgebaut, so dass im Folgenden nur auf die Unterschiede eingegangen wird. Im Gegensatz zum ersten Ausführungsbeispiel ist beim zweiten Ausführungsbeispiel die Düse 13 getrennt von dem optischen Element 10 ausgebildet. Somit kann die Kühlung unabhängig von der Führung des Laserstrahls 9 erfolgen. Nichtsdestotrotz wird das Kühlmittel im Bereich des Schnittpunkts 8 auf das Werkstück 6 aufgebracht.

Die vorliegende Erfindung erlaubt es, die beim Laserstrahlschneiden entstehende Änderung des Gefüges eines Werkstücks auf eine Tiefe zu reduzieren, die mit einer chemischen Nachbehandlung entfernt werden kann. Der Herstellungsprozess von Sägezahnstrukturen kann somit erheblich verkürzt werden.

### Bezugszeichenliste

- 1: Vorrichtung
- 2: Sägezahnstruktur
- 3: Laser
- 4: Kühlmittelpumpe
- 5: Haltevorrichtung
- 6: Werkstück
- 7: Steuereinrichtung
- 8: Schnittpunkt
- 9: Laserstrahl
- 10: optisches Element
- 11: Leitung
- 12: Datenleitung
- 13: Düse

## Patentansprüche

1. Verfahren zur Herstellung einer Sägezahnstruktur (2), bei dem die Sägezahnstruktur (2) mit einem von einem Laser (3) emittierten Laserstrahl in ein Werkstück (6) geschnitten wird, wobei der Laserstrahl in einem Schnittpunkt (8) auf das Werkstück (6) einwirkt und das Werkstück (6) zumindest in einem Bereich um den Schnittpunkt (8) durch Bereitstellen eines Kühlmittels gekühlt wird.

2. Verfahren nach Anspruch 1, wobei nach dem Schneiden zumindest die Sägezahnstruktur (2) des Werkstücks (6) durch ein chemisches Verfahren bearbeitet wird, wodurch eine Oberflächenschicht zumindest der Sägezahnstruktur (2) des Werkstücks (6) abgetragen wird.

3. Verfahren nach Anspruch 1 oder 2, wobei zumindest eines der folgenden Kühlmittel eingesetzt wird:
- Kohlendioxid,
- Stickstoff,
- Argon,
- Argon-Sauerstoffgemisch,
- Stickstoff-Sauerstoffgemisch,
- Wasser,
- Öl-Emulsion.

4. Verfahren nach einem der vorhergehenden Ansprüche, wobei zumindest eine der folgenden Kühltechniken zum Bereitstellen des Kühlmittels angewendet wird:
- Badkühlung,
- Tropfenkühlung,
- Gaskühlung,
- Sprühnebelkühlung,
- Trockeneiskühlung.

5. Verfahren nach einem der vorhergehenden Ansprüche, wobei das Kühlmittel als Inertgas für das Schneiden mit dem Laserstrahl dient.

6. Vorrichtung (1) zur Herstellung einer Sägezahnstruktur (2), umfassend eine Lasereinrichtung (3, 10) zur Erzeugung und Führung eines Laserstrahls, eine Kühleinrichtung (4) zum Bereitstellen eines Kühlmittels, eine Haltevorrichtung (5) für ein Werkstück (6) und eine Steuereinrichtung (7), wobei die Steuereinrichtung (7) eingerichtet ist, die Lasereinrichtung (3) und/oder die Haltevorrichtung (5) so zu bewegen, dass die Sägezahnstruktur (2) in dem Werkstück (6) durch den Laserstrahl ausgeschnitten wird und die Kühleinrichtung (4) so ausgerichtet ist, dass zumindest in einem Bereich um einen Schnittpunkt (8), in dem der Laserstrahl auf das Werkstück (6) einwirkt, das Werkstück (6) gekühlt wird.

7. Vorrichtung (1) nach Anspruch 6, wobei die Kühleinrichtung (4) zumindest teilweise in die Lasereinrichtung (3, 10) integriert ist.

8. Vorrichtung (1) nach Anspruch 6, wobei die Kühleinrichtung (4) separat von der Lasereinrichtung (3) ausgebildet ist.
